# EUROPÄISCHE PATENTSCHRIFT

(11) **EP 4 499 470 B1**
(45) Veröffentlichungstag und Bekanntmachung des Hinweises auf die Patenterteilung: **03.06.2026**
(21) Anmeldenummer: 23703414.5
(22) Anmeldetag: 02.02.2023
(51) Int. Cl.: B60W 50/02, B60W 50/029, B60W 50/14, B60W 30/18

(54) **VERFAHREN UND VORRICHTUNG ZUM BETRIEB EINES FAHRZEUGS**
METHOD AND DEVICE FOR OPERATING A VEHICLE
PROCÉDÉ ET DISPOSITIF PERMETTANT DE FAIRE FONCTIONNER UN VÉHICULE

(30) Priorität: 29.03.2022 DE 102022107335
(43) Veröffentlichungstag der Anmeldung: 05.02.2025
(73) Patentinhaber: Daimler Truck AG, 70771 Leinfelden-Echterdingen (DE)
(72) Erfinder: AURAND, Tobias, 70771 Leinfelden-Echterdingen (DE); ZIMMER, Markus, 70771 Leinfelden-Echterdingen (DE)
(74) Vertreter: JENSEN & SON
(86) Internationale Anmeldenummer: PCT/EP2023/052510
(87) Internationale Veröffentlichungsnummer: WO 2023/186370

(56) Entgegenhaltungen:
- US-A1- 2016 071 332
- US-A1- 2020 283 008
- US-A1- 2021 094 575

## Beschreibung

Die Erfindung betrifft ein Verfahren und eine Vorrichtung zum Betrieb eines Fahrzeugs.

Aus dem Stand der Technik ist, wie in der FR 3 098 481 A1 beschrieben, ein Verfahren zur Meldung einer Gefahr an den Fahrer eines Kraftfahrzeugs bekannt. Dabei wird eine gefährliche Situation, die wahrscheinlich Auswirkungen auf das Fahrzeug hat, erfasst. Es wird eine Reaktion des Fahrers überwacht. Die Übertragung einer Warnmeldung entsprechend der erkannten gefährlichen Situation wird gemäß den Reaktionen des Fahrers angepasst.

In der CN 112109542 A wird eine Steuerung eines Nebenabtriebs eines Nutzfahrzeugs beschrieben.

Aus der EP 2 620 339 B1 ist eine Steuerung eines Segelmodus für ein Hybridfahrzeug mit ausgeschaltetem Verbrennungsmotor bekannt.

Aus der US 2020/283008 A1 ist eine Vorrichtung bekannt, mit der ein Fahrzeug auf das Auftreten von kritischen Fehlfunktionen überwacht werden kann. Dort wird im Falle eines Stillstands eines Fahrzeugs überprüft, ob eine vorher definierte Reaktion eines Fahrers des Fahrzeugs erfolgt. Bleibt diese aus, so wird das Fahrzeug deaktiviert.

Der Erfindung liegt die Aufgabe zu Grunde, ein gegenüber dem Stand der Technik verbessertes Verfahren und eine gegenüber dem Stand der Technik verbesserte Vorrichtung zum Betrieb eines Fahrzeugs anzugeben.

Die Aufgabe wird erfindungsgemäß gelöst durch ein Verfahren mit den Merkmalen des Anspruchs 1 und eine Vorrichtung mit den Merkmalen des Anspruchs 6.

Vorteilhafte Ausgestaltungen der Erfindung sind Gegenstand der Unteransprüche.

In einem erfindungsgemäßen Verfahren zum Betrieb eines Fahrzeugs wird das Fahrzeug hinsichtlich eines Auftretens vorgegebener kritischer Fehlfunktionen überwacht, bei denen es ohne mindestens eine vorgegebene Reaktion eines Fahrzeugführers erforderlich ist, das Fahrzeug nach einem Stillstand zu deaktivieren und ein erneutes Aktivieren des Fahrzeugs zu verhindern. Bei einem ermittelten Auftreten einer dieser vorgegebenen kritischen Fehlfunktionen wird überprüft, ob das Fahrzeug den Stillstand erreicht hat. Wenn das Vorliegen des Stillstands des Fahrzeugs festgestellt wird, wird eine vorgegebene Zeitspanne gestartet. Während der vorgegebenen Zeitspanne wird überprüft, ob die mindestens eine vorgegebene Reaktion des Fahrzeugführers erfolgt. Das Fahrzeug wird nach Ablauf der vorgegebenen Zeitspanne deaktiviert und/oder das erneute Aktivieren des Fahrzeugs wird verhindert, wenn die mindestens eine vorgegebene Reaktion des Fahrzeugführers während der vorgegebenen Zeitspanne nicht erfolgt ist. Ab dem Start der vorgegebenen Zeitspanne wird, insbesondere über mindestens eine Ausgabeeinheit des Fahrzeugs, eine Information an den Fahrzeugführer bezüglich der vorgegebenen Zeitspanne, bezüglich des erfolgenden Deaktivierens und/oder Verhinderns des erneuten Aktivierens des Fahrzeugs nach Ablauf der vorgegebenen Zeitspanne und bezüglich der erforderlichen mindestens einen vorgegebenen Reaktion des Fahrzeugführers ausgegeben.

Eine erfindungsgemäße Vorrichtung zum Betrieb des Fahrzeugs ist ausgebildet und eingerichtet zur Durchführung dieses Verfahrens. Insbesondere weist die Vorrichtung mindestens eine Verarbeitungseinheit auf, die ausgebildet und eingerichtet ist
- zur Überwachung des Fahrzeugs hinsichtlich des Auftretens der vorgegebenen kritischen Fehlfunktionen, bei denen es ohne mindestens eine vorgegebene Reaktion des Fahrzeugführers erforderlich ist, das Fahrzeug nach dem Stillstand zu deaktivieren und/oder das erneute Aktivieren des Fahrzeugs zu verhindern,
- zur Überprüfung bei einem ermittelten Auftreten einer dieser vorgegebenen kritischen Fehlfunktionen, ob das Fahrzeug den Stillstand erreicht hat,
- bei Feststellung des Vorliegens des Stillstands des Fahrzeugs zum Starten einer vorgegebenen Zeitspanne und zur Überprüfung während der vorgegebenen Zeitspanne, ob die mindestens eine vorgegebene Reaktion des Fahrzeugführers erfolgt,
- zum Deaktivieren des Fahrzeugs und/oder Verhindern des erneuten Aktivierens des Fahrzeugs nach Ablauf der vorgegebenen Zeitspanne und Nichterfolgen der mindestens einen vorgegebenen Reaktion des Fahrzeugführers während der vorgegebenen Zeitspanne, und
- zum Generieren der Ausgabe der Information an den Fahrzeugführer bezüglich der vorgegebenen Zeitspanne, bezüglich des erfolgenden Deaktivierens und/oder Verhinderns des erneuten Aktivierens des Fahrzeugs nach Ablauf der vorgegebenen Zeitspanne und bezüglich der erforderlichen mindestens einen vorgegebenen Reaktion des Fahrzeugführers ab dem Start der vorgegebenen Zeitspanne.

Die Vorrichtung kann auch mehrere Verarbeitungseinheiten aufweisen, die jeweils zum Durchführen einer oder mehrerer dieser Aufgaben ausgebildet und eingerichtet sind, wobei dann jede dieser Aufgaben von mindestens einer der Verarbeitungseinheiten durchgeführt wird.

Die Vorrichtung weist des Weiteren insbesondere die mindestens eine Ausgabeeinheit zur Ausgabe der Information an den Fahrzeugführer bezüglich der vorgegebenen Zeitspanne, bezüglich des erfolgenden Deaktivierens und/oder Verhinderns des erneuten Aktivierens des Fahrzeugs nach Ablauf der vorgegebenen Zeitspanne und bezüglich der erforderlichen mindestens einen vorgegebenen Reaktion des Fahrzeugführers auf.

Die vorgegebene Reaktion des Fahrzeugführers ist insbesondere eine Handlung, welche der Fahrzeugführer vornehmen muss, um zu verhindern, dass das Fahrzeug deaktiviert und/oder das erneute Aktivieren des Fahrzeugs unterbunden wird, beispielsweise eine Handlung zum Beheben der Fehlfunktion oder eine Handlung, welche es ermöglicht, das Fahrzeug zumindest in begrenztem Umfang auch mit dieser Fehlfunktion zu betreiben, zum Beispiel in einem Notbetriebsmodus, in welchem insbesondere eine oder mehrere Fahrzeugfunktionen nur eingeschränkt zur Verfügung stehen, und/oder für eine begrenzte Zeit und/oder für eine begrenzte Wegstrecke. Das Verhindern des erneuten Aktivierens des Fahrzeugs bedeutet insbesondere ein endgültiges Abstellen des Fahrzeugs, beispielsweise zumindest für einen vorgegebenen Zeitraum, innerhalb welchem sich ein Fahrzeugzustand durch den Stillstand des Fahrzeugs normalisieren kann, wodurch die kritische Fehlfunktion beseitigt wird, und/oder bis ein oder mehrere vorgegebene Fahrzeugparameter wieder innerhalb vorgegebener Grenzen liegen, und/oder bis eine Reparatur erfolgt ist, und/oder bis das erneute Aktivieren durch eine hierfür autorisierte Instanz freigegeben wird. Diese autorisierte Instanz ist beispielsweise ein Hersteller des Fahrzeugs, eine, insbesondere vom Hersteller autorisierte, Fahrzeugwerkstatt, ein, insbesondere vom Hersteller und/oder von der Fahrzeugwerkstatt autorisierter, Fahrzeugmechaniker und/oder ein, insbesondere vom Hersteller autorisierter, Fahrzeughändler.

Das Fahrzeug ist beispielsweise ein Nutzfahrzeug, insbesondere Lastkraftwagen, oder ein Personenkraftwagen. Beispielsweise ist das Fahrzeug ein Elektrofahrzeug. Es weist insbesondere ein Hochvoltsystem mit mindestens einem elektrischen Antriebsmotor zum Antrieb des Fahrzeugs auf. Ein solches Hochvoltsystem arbeitet beispielsweise mit einer elektrischen Gleichspannung von größer als 60 V und/oder mit einer elektrischen Wechselspannung von größer als 30 V. Derartige Elektrofahrzeuge setzen im Vergleich zu Fahrzeugen mit Verbrennungsmotor bei dem Fahrzeugführer neue Kenntnisse über ein Fahrzeugverhalten und ein Zusammenspiel einzelner Komponenten voraus. Insbesondere können sich Elektrofahrzeuge und Verbrennungsmotorfahrzeuge in einer Handhabung von auftretenden kritischen Fehlfunktionen stark unterscheiden. Bei Elektrofahrzeugen ist die erfindungsgemäße Lösung besonders vorteilhaft, da während des Betriebs solcher Fahrzeuge mit Hochvoltsystem während der Fahrt die oben beschriebenen kritischen Fehlfunktionen auftreten können, bei denen es, insbesondere aus Sicherheitsgründen, vorteilhaft oder erforderlich ist, bei einem Abstellen des Fahrzeugs einen erneuten Wiederstart und damit ein Weiterfahren zu verhindern.

Ohne die erfindungsgemäße Lösung würde in einem solchen Fall dem Fahrzeugführer durch das Fahrzeug nicht erklärt, dass die erkannte kritische Fehlfunktion dieses Fahrzeugverhalten zur Folge hat und eine Weiterfahrt nach einem Erreichen des Stillstands, insbesondere nach einem Erreichen bestimmter Stillstandsbedingungen, nicht möglich ist. Dieses Fahrzeugverhalten würde somit zu einem Unverständnis seitens des Fahrzeugführers führen. Um sich über den Fahrzeugzustand zu informieren, stünde dem Fahrzeugführer dann beispielsweise nur eine sehr umfangreiche Bedienungsanleitung des Fahrzeugs, auch als Fahrzeughandbuch bezeichnet, zur Verfügung. Der Fahrzeugführer könnte daraus beispielsweise Informationen zu den möglichen kritischen Fehlfunktionen und entsprechende Handlungsoptionen entnehmen, jedoch ist dies mit einem großen Aufwand, insbesondere auch Zeitaufwand, verbunden. Aufgrund der ohne die erfindungsgemäße Lösung fehlenden, insbesondere rechtzeitigen, Bereitstellung von Informationen über das Fahrzeugverhalten und mögliche Handlungsoptionen würde somit ein Einleiten von Gegenmaßnahmen, um ein Liegenbleiben des Fahrzeugs, insbesondere an einer ungünstigen Position, zu verhindern, erheblich erschwert.

Durch die erfindungsgemäße Lösung wird dieses Problem der mangelnden Informationsbereitstellung für den Fahrzeugführer und insbesondere auch der unzureichenden Kommunikation zwischen dem Fahrzeug und dem Fahrzeugführer gelöst, beispielsweise indem dem Fahrzeugführer auf einer Anzeigeeinheit, beispielsweise einem Borddisplay des Fahrzeugs, ein Zeithorizont, d. h. die Zeitspanne bis zur endgültigen, finalen Abschaltung des Fahrzeugs, d. h. bis zum Deaktivieren und/oder Verhindern des erneuten Aktivierens, und daraus resultierende Konsequenzen angezeigt werden. Zusätzlich werden dem Fahrzeugführer durch eine automatische Informationsausgabe, insbesondere durch ein automatisches Anzeigen auf der beispielsweise als Borddisplay ausgebildeten Anzeigeeinheit, Handlungsempfehlungen aufgezeigt, d. h. Informationen zur mindestens einen erforderlichen Reaktion des Fahrzeugführers, beispielsweise durch Anzeigen einer entsprechenden Seite der Bedienungsanleitung. Dadurch wird der Fahrzeugführer in die Lage versetzt, Gegenmaßnahmen zu ergreifen, d. h. die mindestens eine vorgegebene Reaktion auszuführen. Auf diese Weise kann zum Beispiel das Liegenbleiben des Fahrzeugs vollständig verhindert werden oder es kann zumindest verhindert werden, dass das Fahrzeug an einer ungünstigen Position liegenbleibt. Zudem wird dem Fahrzeugführer durch die erfindungsgemäße Lösung das Verhalten des Fahrzeugs verdeutlicht, so dass es für ihn plausibel wird.

Die erfindungsgemäße Lösung umfasst somit insbesondere ein intelligentes Ausgabekonzept, insbesondere Anzeigekonzept, mittels welchem bei Auftreten einer kritischen Fehlfunktion das Liegenbleiben des Fahrzeugs, insbesondere in einer ungünstigen Position, vermieden werden kann. Der Fahrzeugführer ist sich durch die erfindungsgemäße Lösung, insbesondere durch die dadurch bereitgestellten Informationen, der Konsequenzen der vorliegenden Situation bewusst und wird über die Ausgabe der Informationen, insbesondere über die Anzeige im Borddisplay, gezielt befähigt, Gegenmaßnahmen zu ergreifen, d. h. die von ihm erwartete vorgegeben Reaktion, insbesondere Handlung, auszuführen, bevor ein erneutes Aktivieren des Fahrzeugs verhindert wird. Dadurch hat der Fahrzeugführer zumindest die Möglichkeit, einen Abstellort seines Fahrzeugs an einer besonders günstigen und sicheren Stelle selbst zu wählen.

Die erfindungsgemäße Lösung ermöglicht insbesondere eine Verbesserung einer Interaktion zwischen Fahrzeug und Fahrzeugführer bei einem Auftreten einer solchen kritischen Fehlfunktion. Durch das erfindungsgemäße Ausgabekonzept, insbesondere Anzeigekonzept, insbesondere durch eine Anzeige eines ablaufenden Timers oder Countdowns, ist sich der Fahrzeugführer über das Fahrzeugverhalten und die Konsequenzen der Situation bewusst und interne Vorgänge, beispielsweise in einer Software, die den Verfahrensablauf bestimmt, werden ihm verständlich gemacht. Dadurch kann die Entstehung von Frustration über das Fahrzeug vermieden werden, welche bei für den Fahrzeugführer nicht verständlichen Vorgängen auftreten kann. Das Fahrzeug unterstützt den Fahrzeugführer gezielt durch die automatische Ausgabe, insbesondere Anzeige, relevanter Informationen im aufgetretenen Fehlerfall.

In einer möglichen Ausführungsform des Verfahrens ist vorgesehen, dass die Information auf einer als Anzeigeeinheit ausgebildeten Ausgabeeinheit des Fahrzeugs ausgegeben wird, beispielsweise, wie oben bereits erwähnt, auf dem Borddisplay des Fahrzeugs. Entsprechend ist in einer möglichen Ausführungsform der Vorrichtung zur Durchführung des Verfahrens vorgesehen, dass die Ausgabeeinheit als eine solche Anzeigeeinheit ausgebildet ist. Die Anzeigeeinheit ist insbesondere eine Multimediaanzeigeeinheit. Beispielsweise weist sie auch mindestens einen Lautsprecher auf. Die oben beschriebenen Informationen, die an den Fahrzeugführer ausgegeben werden, können auf der Anzeigeeinheit beispielsweise mittels Text, Zahlen, Bildern und/oder Piktogrammen angezeigt werden. Insbesondere ist vorgesehen, dass auch Abschnitte, beispielsweise eine oder mehrere Seiten, der Bedienungsanleitung des Fahrzeugs angezeigt werden können. Die Zeitspanne kann dem Fahrzeugführer beispielsweise in Form des bereits erwähnten Timers oder Countdowns angezeigt werden, d. h. beispielsweise in Form eines dargestellten Herunterzählens bis Null oder Hochzählens bis zu einem dargestellten Endwert, und/oder graphisch, zum Beispiel in Form eines sich bis zu einem Endpunkt verlängernden oder bis Null reduzierenden Balkens oder in Form eines sich von einem Vollkreis bis Null reduzierenden Kreises oder eines sich bildenden Kreises. Es wird somit eine umfassende und für den Fahrzeugführer schnell und einfach zu erfassende Informationsausgabe ermöglicht.

In einer möglichen Ausführungsform des Verfahrens ist somit vorgesehen, dass die Information bezüglich der vorgegebenen Zeitspanne als Timer oder Countdown ausgegeben wird, zum Beispiel auf die oben beschriebene Weise. Alternativ oder zusätzlich kann somit in einer möglichen Ausführungsform des Verfahrens vorgesehen sein, dass die Information bezüglich der erforderlichen mindestens einen vorgegebenen Reaktion des Fahrzeugführers durch ein Anzeigen eines diese mindestens eine vorgegebene Reaktion des Fahrzeugführers beschreibenden Abschnitts der Bedienungsanleitung des Fahrzeugs ausgegeben wird.

Das Vorliegen des Stillstands des Fahrzeugs wird insbesondere anhand vorgegebener Stillstandsbedingungen überprüft. Dabei ist insbesondere vorgesehen, dass das Vorliegen des Stillstands des Fahrzeugs nur dann festgestellt wird, wenn alle vorgegebenen Stillstandsbedingungen erfüllt sind. Es ist insbesondere vorgesehen, dass das Vorliegen des Stillstands des Fahrzeugs festgestellt wird, insbesondere nur dann festgestellt wird, wenn als vorgegebene Stillstandsbedingungen erfüllt sind, dass eine aktuelle Geschwindigkeit des Fahrzeugs 0 km/h beträgt und ein Gangwahlhebel des Fahrzeugs sich in einer Neutralstellung oder einer Parkstellung befindet und eine Feststellbremse des Fahrzeugs aktiviert ist. Dadurch wird insbesondere vermieden, dass die oben beschriebenen Konsequenzen, d. h. das Deaktivieren des Fahrzeugs und/oder das Verhindern des erneuten Aktivierens, beispielweise während der Fahrt des Fahrzeugs oder während eines kurzen, beispielsweise verkehrsbedingten, Haltens des Fahrzeugs eintreten, insbesondere während sich das Fahrzeug noch auf einer Fahrbahn befindet. Auf diese Weise werden Beeinträchtigungen der Sicherheit des Fahrzeugs und des Fahrzeugführers und anderer Verkehrsteilnehmer, insbesondere aufgrund einer Kollisionsgefahr, vermieden.

Diese drei Stillstandsbedingungen sind, zumindest mit sehr hoher Wahrscheinlichkeit, in Kombination miteinander nur dann erfüllt, wenn das Fahrzeug abseits der Fahrbahn geparkt ist oder für eine sehr lange Zeit verkehrsbedingt auf der Fahrbahn stehen muss, beispielsweise in einem Stau oder vor einer Ampel mit sehr langer Rotphase. Daher kann, wenn diese drei Stillstandsbedingungen erfüllt sind, davon ausgegangen werden, dass das Fahrzeug an einem sicheren Abstellort abgestellt wurde, an welchem Gefahren, insbesondere Kollisionsgefahren, für den Fahrzeugführer und das Fahrzeug sowie für andere Verkehrsteilnehmer minimiert sind, oder dass andere Verkehrsteilnehmer das auf diese Weise abgestellte Fahrzeug zumindest wahrgenommen haben und daher nicht durch das stehende Fahrzeug überrascht werden. Der oben erwähnte Gangwahlhebel ist beispielsweise ein Wahlhebel zum Einlegen einer Getriebestufe eines Getriebes eines Antriebsstrangs des Fahrzeugs und/oder ein Wahlhebel zum Anwählen eines Fahrmodus des Fahrzeugs, insbesondere Vorwärtsfahrt oder Rückwärtsfahrt. In einer Neutralstellung oder einer Parkstellung ist weder eine Vorwärtsfahrt noch eine Rückwärtsfahrt des Fahrzeugs möglich, insbesondere ist keine Kraftübertragung vom Antriebsmotor oder von den Antriebsmotoren des Fahrzeugs an Räder des Fahrzeugs möglich.

In einer möglichen Ausführungsform der Vorrichtung ist vorgesehen, dass die mindestens eine Verarbeitungseinheit und/oder die Ausgabeeinheit mit einem CAN (Controller Area Network), auch als CAN-Bus bezeichnet, des Fahrzeugs gekoppelt sind. Dadurch wird es beispielsweise ermöglicht, dass der Verarbeitungseinheit und/oder der Anzeigeeinheit die kritische Fehlfunktion beispielsweise durch Übermittlung eines entsprechenden Fehlercodes über den CAN mitgeteilt wird, beispielsweise von einer anderen Komponente des Fahrzeugs, in welcher die kritische Fehlfunktion aufgetreten ist oder welche die kritische Fehlfunktion festgestellt hat. Diese Komponente ist beispielsweise ein Steuergerät des Fahrzeugs.

In einer möglichen Ausführungsform der Vorrichtung ist vorgesehen, dass die mindestens eine Verarbeitungseinheit und die Ausgabeeinheit als eine gemeinsame Einheit ausgebildet sind. Beispielsweise ist das oben bereits erwähnte Borddisplay, insbesondere Multimedia-Borddisplay, des Fahrzeugs sowohl als Anzeigeeinheit als auch als Verarbeitungseinheit ausgebildet. Dadurch wird vermieden, zur Durchführung des Verfahrens eine Vielzahl zusätzlicher Komponenten im Fahrzeug verbauen zu müssen, sondern beispielsweise ist allein die Anzeigeeinheit, insbesondere das Borddisplay, bereits ausreichend. Dabei kann beispielsweise ein ohnehin bereits im Fahrzeug vorgesehenes Borddisplay verwendet werden oder ein ohnehin vorgesehenes herkömmliches Borddisplay kann durch das zur Durchführung des Verfahrens vorgesehene Borddisplay ersetzt werden.

Ausführungsbeispiele der Erfindung werden im Folgenden anhand einer Zeichnung näher erläutert.

Dabei zeigt:

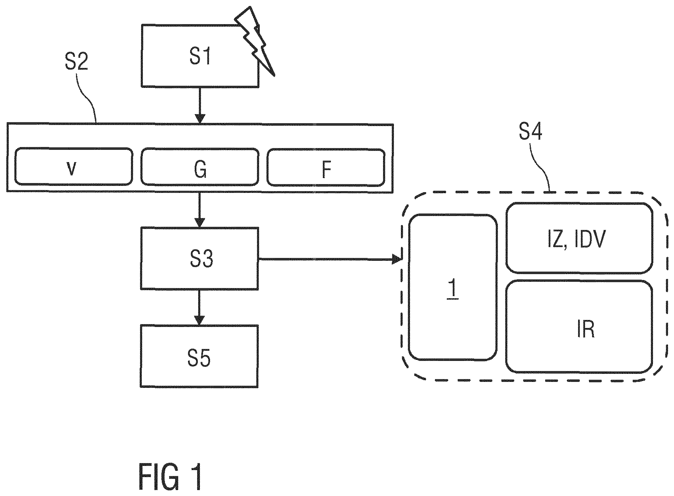

- Fig. 1: schematisch einen Ablauf eines Verfahrens zum Betrieb eines Fahrzeugs.

Figur 1 zeigt eine schematische Darstellung eines Verfahrens zum Betrieb eines Fahrzeugs.

In einem ersten Schritt S1 des Verfahrens wird das Fahrzeug hinsichtlich eines Auftretens vorgegebener kritischer Fehlfunktionen überwacht, bei denen es ohne mindestens eine vorgegebene Reaktion eines Fahrzeugführers erforderlich ist, das Fahrzeug nach einem Stillstand zu deaktivieren und/oder ein erneutes Aktivieren des Fahrzeugs zu verhindern.

Wenn hierbei das Auftreten einer dieser vorgegebenen kritischen Fehlfunktionen ermittelt, wie in Figur 1 schematisch durch ein Fehlfunktionssymbol im ersten Schritt S1 dargestellt, wird in einem zweiten Schritt S2 überprüft, ob das Fahrzeug den Stillstand erreicht hat. Hierzu wird im dargestellten Beispiel überprüft, ob vorgegebene Stillstandsbedingungen erfüllt sind. Das Vorliegen des Stillstands des Fahrzeugs wird im dargestellten Beispiel festgestellt, wenn als vorgegebene Stillstandsbedingungen eine aktuelle Geschwindigkeit v des Fahrzeugs 0 km/h beträgt, ein Gangwahlhebel G des Fahrzeugs sich in einer Neutralstellung oder einer Parkstellung befindet und eine Feststellbremse F des Fahrzeugs aktiviert ist.

Wenn das Vorliegen des Stillstands des Fahrzeugs festgestellt wird, wird in einem dritten Schritt S3 eine vorgegebene Zeitspanne gestartet, insbesondere ein auf die vorgegebene Zeitspanne eingestellter Timer oder Countdown, und während der vorgegebenen Zeitspanne wird überprüft, ob die mindestens eine vorgegebene Reaktion des Fahrzeugführers erfolgt.

Ab dem Start der vorgegebenen Zeitspanne werden in einem vierten Schritt S4 mittels einer Ausgabeeinheit 1 an den Fahrzeugführer eine Information IZ bezüglich der vorgegebenen Zeitspanne, eine Information IDV bezüglich des erfolgenden Deaktivierens und/oder Verhinderns des erneuten Aktivierens des Fahrzeugs nach Ablauf der vorgegebenen Zeitspanne und eine Information IR bezüglich der erforderlichen mindestens einen vorgegebenen Reaktion des Fahrzeugführers ausgegeben.

Diese Ausgabeeinheit 1 ist insbesondere als eine Anzeigeeinheit ausgebildet, insbesondere als eine Multimedia-Ausgabeeinheit, insbesondere als ein Multimedia-Borddisplay des Fahrzeugs. Die Information IZ bezüglich der vorgegebenen Zeitspanne wird beispielweise als Timer oder Countdown ausgegeben, insbesondere auf der Anzeigeeinheit angezeigt. Die Information IR bezüglich der erforderlichen mindestens einen vorgegebenen Reaktion des Fahrzeugführers wird beispielsweise durch ein Anzeigen eines diese mindestens eine vorgegebene Reaktion des Fahrzeugführers beschreibenden Abschnitts einer Bedienungsanleitung des Fahrzeugs ausgegeben.

In einem fünften Schritt S5 wird das Fahrzeug nach Ablauf der vorgegebenen Zeitspanne deaktiviert und/oder das erneute Aktivieren des Fahrzeugs verhindert, wenn die mindestens eine vorgegebene Reaktion des Fahrzeugführers während der vorgegebenen Zeitspanne nicht erfolgt ist. D. h. dieser fünfte Schritt S5 erfolgt nur in diesem Fall, er kann somit durch die vorgegebene Reaktion des Fahrzeugführers, insbesondere durch ein Ausführen einer vorgegebenen Handlung durch den Fahrzeugführer, vermieden werden.

Eine Vorrichtung zum Betrieb des Fahrzeugs ist zur Durchführung dieses Verfahrens ausgebildet und eingerichtet. Sie umfasst insbesondere mindestens eine Verarbeitungseinheit zur Durchführung der beschriebenen Schritte S1 bis S5, wobei im vierten Schritt S4 zumindest die Ausgabe der oben beschriebenen auszugebenden Informationen IZ, IDV, IR generiert wird, und die Ausgabeeinheit 1. Beispielsweise sind die mindestens eine Verarbeitungseinheit und die Ausgabeeinheit 1 als eine gemeinsame Einheit ausgebildet.

Die beschriebene Lösung ist oder umfasst somit insbesondere eine Methode, bei diversen auftretenden kritischen Fehlfunktionen dem Fahrzeugführer dabei im Fahrzeug ablaufende Prozesse nach Erreichen der Stillstandsbedingungen transparent zu machen, einen verbleibenden Zeithorizont anzugeben, innerhalb welchem der Fahrzeugführer Konsequenzen, die ihm verdeutlicht werden, vermeiden kann, und ihm zeitgleich passende Handlungsalternativen aufzuzeigen, d. h. Informationen IR zur von ihm erwarteten Reaktion zu geben, um diese Konsequenzen zu vermeiden. Dadurch kann insbesondere ein Liegenbleiben des Fahrzeugs in einer ungünstigen Position vermieden werden. Zudem wird dadurch eine Frustration des Fahrzeugführers über unplausibles Fahrzeugverhalten vermieden, da das Fahrzeugverhalten durch die beschriebene Lösung, insbesondere durch die Informationsausgabe, für den Fahrzeugführer plausibel ist.

Zur Informationsausgabe und Interaktion des Fahrzeugs mit dem Fahrzeugführer ist die Ausgabeeinheit 1, insbesondere das Multimedia-Borddisplay, beispielsweise als zusätzliche Schnittstelle im Fahrzeug vorgesehen. Insbesondere ist vorgesehen, dass diese Ausgabeeinheit 1 auf den CAN des Fahrzeugs zugreifen kann.

Im Folgenden wird das Verfahren nochmals zusammengefasst beschrieben. Dem Fahrzeugführer werden nach dem Auftreten der kritischen Fehlfunktion und dem Erreichen der definierten Stillstandsbedingungen auf der insbesondere als Multimedia-Borddisplay ausgebildeten Ausgabeeinheit 1 die Information IZ über die vorgegebene Zeitspanne, insbesondere als herunterlaufender Timer, d. h. Countdown, die Information IDV über die eintretenden Konsequenzen, d. h. bezüglich des erfolgenden Deaktivierens und/oder Verhinderns des erneuten Aktivierens des Fahrzeugs nach Ablauf der vorgegebenen Zeitspanne, und die Information IR bezüglich der erforderlichen mindestens einen vorgegebenen Reaktion des Fahrzeugführers ausgegeben, letztere insbesondere als passende Handlungsalternativen. Dadurch wird der Fahrzeugführer befähigt, das endgültige Abschalten des Fahrzeugs, d. h. das Deaktivieren und/oder Verhindern des erneuten Aktivierens des Fahrzeugs, zu verhindern.

Beispielsweise wird bei Auftreten der vorgegebenen kritischen Fehlfunktion ein resultierender Fehlercode über den CAN versendet, und danach wird das Vorliegen der Stillstandsbedingungen geprüft, um dadurch zu ermitteln, ob sich das Fahrzeug im Stillstand befindet.

Wenn die Stillstandsbedingungen erfüllt sind, startet die vorgegebene Zeitspanne von beispielsweise 10 Sekunden, deren Ablauf das finale Abstellen des Fahrzeugs, d. h. das Deaktivieren, einleitet und damit den Wiederstart des Fahrzeugs, d. h. das erneute Aktivieren, verhindert. Dies wird dem Fahrzeugführer durch die beschriebene Informationsausgabe bewusst gemacht, insbesondere über die Ausgabe des ablaufenden Timers oder Countdowns und über die Ausgabe der Konsequenz, d. h. das Deaktivieren und/oder Verhindern des erneuten Aktivierens des Fahrzeugs. Um diese Konsequenz zu vermeiden, wird dem Fahrzeugführer zusätzlich die Information IR bezüglich seiner erforderlichen vorgegebenen Reaktion angezeigt, beispielsweise in Form alternativer Handlungsmöglichkeiten, um Gegenmaßnahmen ergreifen zu können. Dies erfolgt beispielsweise durch die automatische Anzeige des entsprechenden Abschnitts, beispielsweise entsprechender Seiten, in der Bedienungsanleitung.

## Patentansprüche

1. Verfahren zum Betrieb eines Fahrzeugs, bei dem
- das Fahrzeug hinsichtlich eines Auftretens vorgegebener kritischer Fehlfunktionen überwacht wird, bei denen es ohne mindestens eine vorgegebene Reaktion eines Fahrzeugführers erforderlich ist, das Fahrzeug nach einem Stillstand zu deaktivieren und/oder ein erneutes Aktivieren des Fahrzeugs zu verhindern,
- bei einem ermittelten Auftreten einer dieser vorgegebenen kritischen Fehlfunktionen überprüft wird, ob das Fahrzeug den Stillstand erreicht hat,
**dadurch gekennzeichnet, dass**
- wenn das Vorliegen des Stillstands des Fahrzeugs festgestellt wird, eine vorgegebene Zeitspanne gestartet wird und während der vorgegebenen Zeitspanne überprüft wird, ob die mindestens eine vorgegebene Reaktion des Fahrzeugführers erfolgt,
- das Fahrzeug nach Ablauf der vorgegebenen Zeitspanne deaktiviert wird und/oder das erneute Aktivieren des Fahrzeugs verhindert wird, wenn die mindestens eine vorgegebene Reaktion des Fahrzeugführers während der vorgegebenen Zeitspanne nicht erfolgt ist,
- ab dem Start der vorgegebenen Zeitspanne eine Information (IZ, IDV, IR) an den Fahrzeugführer bezüglich der vorgegebenen Zeitspanne, bezüglich des erfolgenden Deaktivierens und/oder Verhinderns des erneuten Aktivierens des Fahrzeugs nach Ablauf der vorgegebenen Zeitspanne und bezüglich der erforderlichen mindestens einen vorgegebenen Reaktion des Fahrzeugführers ausgegeben wird.

2. Verfahren nach Anspruch 1,
**dadurch gekennzeichnet, dass** die Information (IZ, IDV, IR) auf einer Anzeigeeinheit (1) des Fahrzeugs ausgegeben wird.

3. Verfahren nach einem der vorhergehenden Ansprüche,
**dadurch gekennzeichnet, dass** die Information (IZ) bezüglich der vorgegebenen Zeitspanne als Timer oder Countdown ausgegeben wird.

4. Verfahren nach einem der vorhergehenden Ansprüche,
**dadurch gekennzeichnet, dass** die Information (IR) bezüglich der erforderlichen mindestens einen vorgegebenen Reaktion des Fahrzeugführers durch ein Anzeigen eines diese mindestens eine vorgegebene Reaktion des Fahrzeugführers beschreibenden Abschnitts einer Bedienungsanleitung des Fahrzeugs ausgegeben wird.

5. Verfahren nach einem der vorhergehenden Ansprüche,
**dadurch gekennzeichnet, dass** das Vorliegen des Stillstands des Fahrzeugs festgestellt wird, wenn als vorgegebene Stillstandsbedingungen erfüllt sind, dass
- eine aktuelle Geschwindigkeit (v) des Fahrzeugs 0 km/h beträgt,
- ein Gangwahlhebel (G) des Fahrzeugs sich in einer Neutralstellung oder einer Parkstellung befindet, und
- eine Feststellbremse (F) des Fahrzeugs aktiviert ist.

6. Vorrichtung zum Betrieb eines Fahrzeugs, aufweisend mindestens eine Verarbeitungseinheit, die ausgebildet und eingerichtet ist:
- zur Überwachung des Fahrzeugs hinsichtlich des Auftretens der vorgegebenen kritischen Fehlfunktionen, bei denen es ohne mindestens eine vorgegebene Reaktion des Fahrzeugführers erforderlich ist, das Fahrzeug nach dem Stillstand zu deaktivieren und/oder das erneute Aktivieren des Fahrzeugs zu verhindern,
- zur Überprüfung, ob das Fahrzeug den Stillstand erreicht hat, bei einem ermittelten Auftreten einer dieser vorgegebenen kritischen Fehlfunktionen,
**dadurch gekennzeichnet, dass** die Verarbeitungseinheit weiter ausgebildet und eingerichtet ist:
- zum Starten einer vorgegebenen Zeitspanne und zur Überprüfung während der vorgegebenen Zeitspanne, ob die mindestens eine vorgegebene Reaktion des Fahrzeugführers erfolgt, bei Feststellung des Vorliegens des Stillstands des Fahrzeugs,
- zum Deaktivieren des Fahrzeugs und/oder Verhindern des erneuten Aktivierens des Fahrzeugs nach Ablauf der vorgegebenen Zeitspanne und Nichterfolgen der mindestens einen vorgegebenen Reaktion des Fahrzeugführers während der vorgegebenen Zeitspanne,
- zum Generieren der Ausgabe der Information (IZ, IDV, IR) an den Fahrzeugführer bezüglich der vorgegebenen Zeitspanne, bezüglich des erfolgenden Deaktivierens und/oder Verhinderns des erneuten Aktivierens des Fahrzeugs nach Ablauf der vorgegebenen Zeitspanne und bezüglich der erforderlichen mindestens einen vorgegebenen Reaktion des Fahrzeugführers ab dem Start der vorgegebenen Zeitspanne,
und aufweisend eine Ausgabeeinheit (1) zur Ausgabe der Information (IZ, IDV, IR) an den Fahrzeugführer bezüglich der vorgegebenen Zeitspanne, bezüglich des erfolgenden Deaktivierens und/oder Verhinderns des erneuten Aktivierens des Fahrzeugs nach Ablauf der vorgegebenen Zeitspanne und bezüglich der erforderlichen mindestens einen vorgegebenen Reaktion des Fahrzeugführers.

7. Vorrichtung nach Anspruch 6,
**dadurch gekennzeichnet, dass** die Ausgabeeinheit (1) als eine Anzeigeeinheit ausgebildet ist.

8. Vorrichtung nach Anspruch 6 oder 7,
**dadurch gekennzeichnet, dass** die mindestens eine Verarbeitungseinheit und/oder die Ausgabeeinheit (1) mit einem CAN des Fahrzeugs gekoppelt sind/ist.

9. Vorrichtung nach einem der Ansprüche 6 bis 8,
**dadurch gekennzeichnet, dass** die mindestens eine Verarbeitungseinheit und die Ausgabeeinheit (1) als eine gemeinsame Einheit ausgebildet sind.

## Claims

1. A method for operating a vehicle in which:
- the vehicle is monitored in respect of the occurrence of predefined critical malfunctions during which it is necessary, in the absence of at least one predefined reaction required of a vehicle driver, to deactivate the vehicle once it has come to a complete stop and/or to prevent the reactivation of the vehicle;
- upon detection of one of these predefined critical malfunctions a check is carried out to ascertain whether the vehicle has come to complete stop;
**characterised in that**
- once it has been established that the vehicle has come to a complete stop a predefined period of time is started, and during this predefined period of time a check is carried out to ascertain whether the at least one predefined reaction of the driver takes place;
- once the predetermined period of time has elapsed the vehicle is deactivated and/or the reactivation of the vehicle is prevented if the at least one predefined reaction of the vehicle driver has not taken place during the predefined period of time;
- with effect from the start of the predefined period of time a message (IZ, IDV, IR) is output to the vehicle driver in relation to the predefined period of time, in relation to the occurrence of the deactivation and/or the prevention of the reactivation of the vehicle on expiry of the predefined period of time and in relation to the at least one predefined reaction required of the driver.

2. A method according to claim 1,
**characterised in that** the message (IZ, IDV, IR) is output on a display unit (1) of the vehicle.

3. A method according to any one of the preceding claims,
**characterised in that** the message (IZ) in relation to the predefined period of time is output in the form of a timer or a countdown.

4. A method according to any one of the preceding claims,
**characterised in that** the message (IR) in relation to the at least one predetermined reaction required of the vehicle driver is output by displaying a section of an operating manual of the vehicle describing this at least one predefined reaction of the vehicle driver.

5. A method according to any one of the preceding claims,
**characterised in that** the fact that the vehicle has come to a complete stop is established when the following predefined complete stop conditions have been met:
- a current speed (v) of the vehicle is 0 km/h;
- a gear selection lever (G) of the vehicle is located in a neutral position or a parking position; and
- a parking brake (F) of the vehicle is activated.

6. A device for operating a vehicle,
comprising at least one processing unit that is designed and configured:
- to monitor the vehicle in respect of the occurrence of the predefined critical malfunctions during which it is necessary, in the absence of at least one predefined reaction required of a vehicle driver, to deactivate the vehicle once it has come to a complete stop and/or to prevent the reactivation of the vehicle;
- to check whether the vehicle has come to a complete stop once the occurrence of one of these predefined critical malfunctions has been established;
**characterised in that** the processing unit is further designed and configured:
- to start a predefined period of time and to check during this predefined period of time whether the at least one predefined reaction of the vehicle driver takes place when it is established that the vehicle has come to complete stop;
- to deactivate the vehicle and/or prevent the reactivation of the vehicle upon expiry of the predefined period of time and if the at least one predefined reaction of the vehicle driver has not taken place during the predefined period of time;
- to generate the output of the message (IZ, IDV, IR) to the vehicle driver in relation to the predetermined period of time, in relation to the deactivation and/or prevention of the reactivation of the vehicle on expiry of the predefined period of time and in relation to the at least one predefined reaction required of the vehicle driver with effect from the start of the predefined period of time;
and comprising an output unit (1) for outputting the message (IZ, IDV, IR) to the vehicle driver in relation to the predetermined period of time, in relation to the deactivation and/or prevention of the reactivation of the vehicle on expiry of the predefined period of time and in relation to the at least one predefined reaction required of the vehicle driver.

7. A device according to claim 6,
**characterised in that** the output unit (1) is embodied as a display unit.

8. A device according to claim 6 or 7,
**characterised in that** the at least one processing unit and/or the output unit is/are coupled to a CAN of the vehicle.

9. A device in accordance with any one of claims 6 to 8,
**characterised in that** the at least one processing unit and the output unit (1) are embodied as one single unit.

## Revendications

1. Procédé permettant de faire fonctionner un véhicule, dans lequel
- le véhicule est surveillé, afin de détecter l'apparition de dysfonctionnements critiques prédéfinis, pour lesquels il est nécessaire, sans au moins une réaction prédéfinie du conducteur, de désactiver le véhicule après un arrêt et/ou d'empêcher une nouvelle activation du véhicule,
- lorsqu'un de ces dysfonctionnements critiques prédéfinies est détectée, il est vérifié si le véhicule s'est immobilisé, **caractérisé en ce que**
- lorsqu'il est détecté que le véhicule est à l'arrêt, une période de temps prédéfinie est déclenchée et, pendant la période de temps prédéfinie, il est vérifié si le conducteur a effectué au moins une des réactions prédéfinies,
- le véhicule est désactivé à l'expiration du délai imparti et/ou une nouvelle activation du véhicule est empêchée, si l'au moins une réaction attendue du conducteur ne s'est pas produite pendant la période de temps impartie,
- dès le début de la période de temps prédéfinie, une information (IZ, IDV, IR) est transmise au conducteur concernant la période de temps prédéfinie, concernant la désactivation et/ou l'empêchement de la nouvelle activation du véhicule lorsque la période de temps prédéfinie est écoulée, et concernant l'au moins une réaction prédéfinie de la part du conducteur.

2. Procédé selon la revendication 1,
**caractérisé en ce que** l'information (IZ, IDV, IR) sont affichées sur un écran (1) du véhicule.

3. Procédé selon l'une quelconque des revendications précédentes,
**caractérisé en ce que** l'information (IZ) relative à la période de temps prédéfinie est affichée sous forme de minuterie ou de compte à rebours.

4. Procédé selon l'une quelconque des revendications précédentes,
**caractérisé en ce que** l'information (IR) concernant l'au moins une réaction prédéfinie de la part du conducteur est fournie par l'affichage d'une section du manuel d'utilisation du véhicule décrivant ladite au moins une réaction prédéfinie de la part du conducteur.

5. Procédé selon l'une quelconque des revendications précédentes,
**caractérisé en ce qu'**il est détecté que le véhicule est à l'arrêt, lorsque les conditions d'arrêt prédéfinies sont remplies :
- la vitesse réelle (v) du véhicule s'élève à 0 km/h,
- le levier de sélection de vitesse (G) du véhicule se trouve en position neutre ou en position de stationnement, et
- un frein de stationnement (F) du véhicule est serré.

6. Dispositif destiné à faire fonctionner un véhicule,
comprenant au moins une unité de traitement qui est conçue et configurée :
- pour surveiller le véhicule afin de détecter l'apparition des dysfonctionnements critiques prédéfinis, pour lesquels il est nécessaire, sans au moins une réaction prédéfinie du conducteur, de désactiver le véhicule après un arrêt et/ou d'empêcher une nouvelle activation du véhicule,
- pour vérifier si le véhicule s'est immobilisé, lorsqu'un de ces dysfonctionnements critiques prédéfinis est détecté, **caractérisé en ce que** l'unité de traitement est en outre conçue et configurée pour :
- pour démarrer une période de temps prédéfinie et pour vérifier, pendant la période de temps prédéfinie, si le conducteur effectue l'au moins une réaction prédéfinie, dès qu'il est détecté que le véhicule s'est immobilisé,
- pour désactiver le véhicule et/ou pour empêcher sa nouvelle activation lorsque la période de temps prédéfinie est écoulée et lorsqu'il est détecté que le conducteur n'a pas produit l'au moins une réaction prédéfinie pendant cette période de temps prédéfinie,
- pour amener à la connaissance du conducteur l'information (IZ, IDV, IR) concernant la période de temps prédéfinie, concernant la désactivation et/ou l'empêchement de la nouvelle activation du véhicule à partir du déclenchement de la période de temps prédéfinie,
et comprenant une unité de sortie (1) destinée à apporter au conducteur l'information (IZ, IDV, IR) concernant la période de temps prédéfinie, concernant la désactivation et/ou l'empêchement de la nouvelle activation du véhicule à l'expiration de la période de temps prédéfinie et concernant l'au moins une réaction prédéfinie nécessaire de la part du conducteur.

7. Dispositif selon la revendication 6,
**caractérisé en ce que** l'unité de sortie (1) est conçue comme une unité d'affichage.

8. Dispositif selon la revendication 6 ou 7,
**caractérisé en ce que** l'au moins une unité de traitement et/ou l'unité de sortie (1) est/sont couplée(s) au CAN du véhicule.

9. Dispositif selon l'une quelconque des revendications 6 à 8,
**caractérisé en ce que** l'au moins une unité de traitement et l'unité de sortie (1) sont conçues comme une seule et même unité.
